Europäisches Patentamt

European Patent Office

Office européen des brevets

(19)

(11) Veröffentlichungsnummer: **0 222 688**
**A2**

(12) **EUROPÄISCHE PATENTANMELDUNG**

(21) Anmeldenummer: **86730167.3**

(22) Anmeldetag: **20.10.86**

(51) Int. Cl.⁴: **H 01 H 71/74**

(30) Priorität: **08.11.85 US 796561**

(43) Veröffentlichungstag der Anmeldung:
**20.05.87 Patentblatt 87/21**

(84) Benannte Vertragsstaaten: **DE FR GB IT**

(71) Anmelder: **Siemens Aktiengesellschaft Berlin und München**
**Wittelsbacherplatz 2**
**D-8000 München 2 (DE)**

(72) Erfinder: **May, William Edward**
**539 Maplewood Drive**
**Lawrenceville, GA 30245 (US)**

(54) **Einrichtung zur ferngesteuerten Veränderung von Auslösewerten eines Schaltgerätes und Verfahren zur Umrüstung eines Schaltgerätes.**

㉗ Eine Einrichtung zur ferngesteuerten Veränderung von Auslösekennwerten eines elektronischen Auslösers eines Schaltgerätes (20) umfaßt eine entfernt von dem Schaltgerät aufgestellte Steuereinrichtung (60), der Meßwerte aus dem Hauptstromkreis des Schaltgerätes (A, B, C, N; 72) zuführbar sind. Die Steuereinrichtung, beispielsweise ein Proezßrechner, steuert Schaltmittel, die an eine Eingangsschaltung (43) des elektronischen Auslösers ebenso codierte Signale abgibt. wie die ansonsten zur Einstellung benutzten BCD-Wahlschalter.

FIG 2

**EP 0 222 688 A2**

**Beschreibung**

Einrichtung zur ferngesteuerten Veränderung von Auslösekennwerten eines Schaltgerätes und Verfahren zur Umrüstung eines Schaltgerätes

Die Erfindung betrifft eine Einrichtung zur ferngesteuerten Veränderung von Auslösekennwerten eines elektronischen Auslösers eines Schaltgerätes mittels einer von dem Schaltgerät getrennten Steuereinrichtung.

Eine Einrichtung dieser Art ist durch die EP-A-0 105 786 bekannt geworden. Diese Einrichtung dient dazu, den Einspeiseschalter der Versorgungseinrichtung eines Abnehmers eines Elektrizitätsversorgungsunternehmens aus der Ferne, d. h. z. B. durch eine in dem zugehörigen Zählerkasten untergebrachte Zusatzeinrichtung, auf einen anderen Nennstrom einstellen zu können. Es gibt jedoch, insbesondere im Rahmen der Automatisierung von Fabrikationsbetrieben, Aufgaben, die sich mit Hilfe der erwähnten bekannten Einrichtung nicht lösen lassen. Beispielsweise werden Antriebsmotoren verwendet, die auf unterschiedliche Drehzahlen einstellbar sind oder die mit unterschiedlichen Betriebsspannungen betrieben werden können. Bei diesen Motoren ändert sich bei der Umschaltung auch der Nennstrom, der maßgebend für die Auslösecharakteristik der den Motoren vorgeschalteten Schutzschalter ist. Es besteht jedoch keine Möglichkeit, die elektronischen Auslöseeinheiten der Schaltgeräte an veränderte Betriebsbedingungen der genannten Art unmittelbar anzupassen. Die Vornahme von Einstellarbeiten an den Schaltgeräten selbst oder mittels einer fernsteuerbaren Einrichtung der eingangs erwähnten Art durch eine Bedienungsperson würde aufgrund der unvermeidlichen verzögerten Durchführung und des Arbeitsaufwandes den Zweck einer rationellen Betriebsführung verfehlen.

Der Erfindung liegt hiervon ausgehend die Aufgabe zugrunde, eine Einrichtung zur selbsttätigen Fernsteuerung von Auslösekennwerten eines Schaltgerätes zu schaffen und diese Einstellung im Sinne einer ferngesteuerten Programmierung nicht nur des Nennstromes des Schaltgerätes, sondern auch beliebiger weiterer Auslösekennwerte auszugestalten.

Diese Aufgabe wird bei einer Einrichtung der eingangs genannten Art gemäß der Erfindung dadurch erlöst, daß die Steuereinrichtung durch aus dem Hauptstromkreis des Schaltgerätes ableitbare Werte beaufschlagbar ist und daß zwischen die Steuereinrichtung und einer Eingangsschaltung des elektronischen Auslösers ein Umsetzer zur Übertragung von Auslösekennwerten geschaltet ist. Bei dem Umsetzer kann es sich hierbei im einfachsten Fall um eine Klemmleiste zum Anschluß einer Fernsteuerleitung handeln. Ferner eignen sich als Umsetzer beispielsweise TTL-Baugruppen oder Interface-Bausteine, wie sie in Verbindung mit Computern oder Prozeßrechnern eingesetzt werden. Auf diese Weise läßt sich auch eine völlige galvanische Trennung zwischen der Auslöseeinheit des Schaltgerätes und der Steuereinrichtung erreichen, wodurch eine störungsfreie Fernprogrammierung des Schaltgerätes über größere Entfernungen ermöglicht wird.

Die Einrichtung nach der Erfindung ist insbesondere vorteilhaft in Verbindung mit einem elektronischen Auslöser anwendbar, der einen Mikroprozessor zur Verarbeitung von Meßwerten aus dem zu überwachenden Netz und zur Abgabe eines Auslösesignals für einen Auslösemchanismus sowie eine Decodiereinrichtung für binär codierte (BCD-)Signale aufweist. Ein elektronischer Auslöser dieser Art ist in der EP-A-0 179 017 beschrieben.

Es empfiehlt sich, der Steuereinrichtung Schaltmittel zuzuordnen, die zwischen die Steuereinrichtung und den Umsetzer geschaltet sind. Solche Schaltmittel, bei denen es sich um steuerbare Schaltkontakte oder steuerbare Halbleiter handeln kann, gestatten die Programmierung der elektronischen Auslöseeinheit in derselben Weise, wie dies die bekannten BCD-Wahlschalter tun und erlauben es daher, die Auslöseeinheit selbst vollkommen unverändert zu belassen.

Für die Zwecke der Erfindung kann als Steuereinrichtung beispielsweise eine speziell entworfene elektronische Baugruppe dienen. Es ist jedoch vorteilhaft, hierfür einen üblichen Computer, beispielsweise in der Gestalt eines Prozeßrechners einzusetzen. Dieser verfügt über alle notwendigen Möglichkeiten zur Eingabe von Meßwerten und zur Ausgabe von Schaltbefehlen, und erleichtert somit die Lösung der Aufgabe.

Sofern in einer bestehenden Fabrikationsanlage oder einem sonstigen elektrischen Stromkreis bereits Leistungsschalter mit einer mikroprozessorgesteuerten Auslöseeinheit und von außen zugänglichen Wahlschaltern zur Beeinflussung von Auslösekennwerten vorhanden sind, können solche Leistungsschalter durch folgende Schritte auf ferngesteuerte Beeinflussung der Auslösekennwerte umgestellt werden:
Abtrennung eines oder mehrer Wahlschalter von dem Leistungsschalter;
Anschluß eines Umsetzers an den Leistungsschalter;
Anschluß von steuerbaren Schaltmitteln an den Umsetzer;
Breitstellung einer Steuereinrichtung zur Betätigung der Schaltmittel und
Bereitstellung von Mitteln zur Erfassung von Meßwerten aus dem durch den Leistungsschalter zu schützenden Stromkreis zur Eingabe in die Steuereinrichtung.
Wie man erkennt, ist die Umstellung im wesentlichen durch die Hinzufügung von Baugruppen durchführbar, während Eingriffe in die elektronische Auslöseeinheit unterbleiben können. Die Abtrennung eines oder mehrer Wahlschalter stellt keinen solchen Eingriff dar, da lediglich Leitungen zu unterbrechen sind.

Als Steuereinrichtung eignet sich auch hier, wie bereits erwähnt, ein Prozeßrechner.

Die Erfindung wird im folgenden anhand der Zeichnung näher erläutert.

Die Figur 1 ist ein Blockschaltbild eines Leistungsschalters mit einer Auslöseeinheit auf der Basis eines Mikroprozessors.

Die Figur 2 ist ein vereinfachtes schematisches Schaltbild zur Darstellung der äußeren Steuerung von Auslösekennwerten unter Benutzung eines Computers.

Die Figur 3 ist eine Tabelle, welche den Zusammenhang zwischen der Auslöseeinstellung und der Stellung von Relaiskontakten darstellt.

Die Figuren 4 bis 6 veranschaulichen TTL-Logikglider zur äußeren logischen Steuerung.

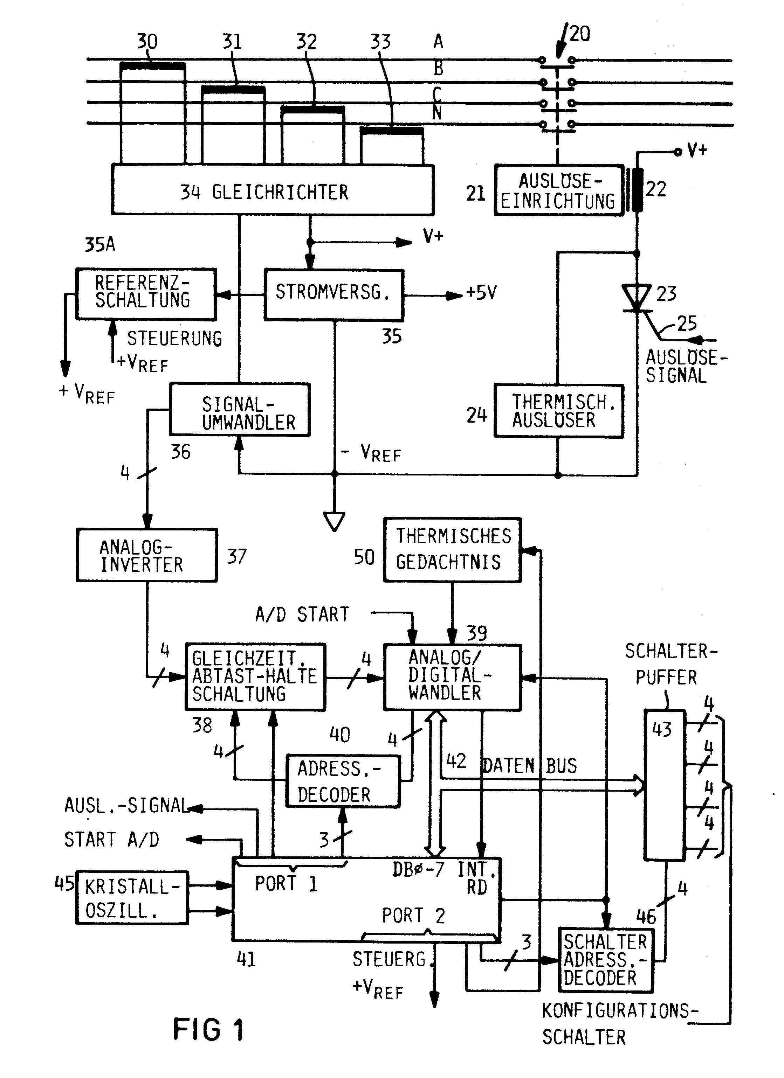

Die Figur 1 zeigt schematisch ein Netz mit den Phasenleitern A, B und C sowie einem Neutralleiter N, der in dem Stromkreis wahlweise vorgesehen sein kann. Der schematisch gezeigte Leistungsschalter 20 ist dementsprechend vierpolig ausgebildet und enthält eine Auslöseeinrichtung 21, die mittels eines durch eine Auslösespule 22 der Auslöseeinrichtung 21 fließenden Stromes betätigt werden kann. Die Auslösespule 22 kann mittels einer durch eine Gleichrichterschaltung 34 bereitgestellten positiven Spannung nach Zündung eines Thyristors 23 gespeist werden, der in Reihe mit der Spule 22 liegt. Ein thermischer Auslösekreis 24 kann ebenfalls vorgesehen sein, um einen Schaltvorgang parallel zu dem Thyristor 23 zu bewirken, wenn die Temperatur des Leistungsschalters 20 einen vorgegebenen Wert überschreitet.

Der Zweck der mikroprozessorgesteuerten Auslöseeinheit besteht darin, ein Auslösesignal an die Steuerelektrode 25 des Thyristors 23 abzugeben, wenn in dem durch den Leistungsschalter 20 zu schützenden Stromkreis bestimmte Verhältnisse eintreten. Die Auslöseeinheit nach der Figur 1 ist ausführlich in der Europäischen Patentanmeldung 0 179 017 beschrieben, so daß es nicht erforderlich ist, an dieser Stelle nähere Einzelheiten darzulegen.

Für die Phasenleiter A, B, C und den Neutralleiter N sind Stromwandler 30, 31, 32 und 33 vorgesehen. Die Ausgangsgrößen dieser Stromwandler werden der erwähnten Gleichrichterschaltung 34 zugeführt, die üblicherweise aus je einem einphasigen Brückengleichrichter für jeden der Wandler 30 bis 33 besteht. Die Ausgangsgröße der Gleichrichterschaltung 34 ist mit einer Stromversorgungsschaltung 35 verbunden, die eine Steuerspannung von 5 Volt zur Speisung der Elemente des Auslöseeinrichtung sowie weiterer logischer Baugruppen erzeugt. Die Stromversorgungsschaltung 35 erzeugt ferner eine Spannung von 12 Volt zur Speisung einer Referenzschaltung 35A, die eine zwischen wenigstens zwei Werten veränderliche und einstellbare Referenzspannung $V_{Ref}$ an den Eingang $+V_{Ref}$ eines A/D-Wandlers anlegt. Eine Umschaltung des Referenzpegels erzeugt eine selbsttätige Maßstabsumschaltung, so daß eine relativ hohe Auflösung in dem Meßkreis im Bereich niedriger Ströme erreicht wird, so daß 8-Bit-Mikroprozessoren mit ausreichender Genauigkeit der Strommessung bei kritischen Stromwerten eingesetzt werden können.

Die Ausgangsgröße der Gleichrichterschaltung 34 wird ferner durch Signalumsetzer 36 geleitet, die die Ausgangsstromsignale der Gleichrichterschaltung 34 einzeln in bestimmte Spannungssignale umwandeln. Die Ausgangsgröße der Signalumsetzer 36 wird dann einem Analoginverter 37 zugeführt, der ihre Polarität von negativ in positiv ändert.

Jedes der einzelnen aus den Leitern A, B, C und N gewonnenen Signale wird dann einer gleichzeitig wirkenden Abtast- und Halteschaltung 38 zugeführt. Die Abtast- und Halteschaltung 38 tastet jede der Ausgangsgrößen der Stromwandler 30 bis 33 gleichzeitig ab. Gleichzeitig lädt jedes der aus den Leitern A, B, C und N gewonnen Signale einen entsprechenden Kondensator auf einen Spannungswert auf, der dem augenblicklichen Strom des betreffenden Leiters entspricht. Die Ladungen der Kondensatoren werden aufeinanderfolgend abgetastet und durch den A/D-Wandler 39 in entsprechende Digitalwerte umgewandelt, die dem Augenblicksstrom des betreffenden Leiters entsprechen und dann dem Mikroprozessor 41 eingeben. Die Adressierungs- und Dekodierungsschaltung 40 koordiniert diesen Vorgang, der durch den Mikrocomputer 41 gesteuert wird. Aus diesen Abtastwerten wird der Effektivwert des Stromes periodisch durch den Mikroprozessor berechnet.

Ein Datenbus 42 verbindet den Mikroprozessor 41 mit dem A/D-Wandler 39 und mit Schalter-Pufferschaltungen 43, die ihrerseits mit vier Wahlschaltern zur Einstellung des Nennstromes, der unverzögerten Auslösung, des Erdschlußstromes und der Erdschlußverzögerung verbunden sind. Jede gewünschte Anzahl von Wahlschaltern kann benutzt werden entsprechend der Anzahl gewünschter Auslöseparameter. Diese Schalter sind BCD-Schalter, die außerhalb der Steuerschaltungen angeordnet sind, so daß sie von Hand auf einfache Weise einstellbar sind. Um die Parameter einzustellen, werden die BCD-Schalter einzeln adressiert und durch den Mikrocomputer gelesen. Aufgrund der Einstellung dieser Schalter und der durch den A/D-Wandler gelesenen Werte berechnet der Mikrocomputer eine Zeit zur Auslösung des Leistungsschalters. Falls der Strom nicht abnimmt, und die berechnete Zeit erreicht ist, gibt der Mikrocomputer ein Auslösesignal ab.

Wie die Figur 1 zeigt, ist ferner ein Kristalloszillator 45 sowie eine Schalteradressier- und Decodierschaltung 46 vorgesehen, die zwischen den Mikroprozessor 41 und die Schalter-Pufferschaltung 43 geschaltet ist. Ferner ist ein thermisches Gedächtnis 50, z. B. auf der Basis eine Thermistors oder einer kapazitiven Schaltung vorgesehen.

Bekannte Schaltgeräte, beispielsweise Leistungsschalter mit Isolierstoffgehäuse, besitzen eine digitale Auslöseeinheit mit einem Mikroprozessor zur Auslösung des Schalters unter bestimmten Bedingungen besitzen. Die Grundfunktion besteht darin, daß die Auslöseeinheit die durch den Leistungsschalters fließenden Ströme überwacht und den Schalter auslöst, wenn der Strom einen festgesetzten Wert aufgrund einer Überlastung oder als Ergebnis eines Kurzschlußes überschreitet. Ferner löst die Auslöseeinheit den Schalter aufgrund eines Erdschlusses aus. Der Wert, bei dem die Auslöseeinheit den Leistungsschalter bei einer gegebenen Bedingung auslöst, kann durch die Einstellung von Wahlschaltern an dem Leistungsschalter

3

eingestellt werden, die mit Decodern verbunden sind, welche die Schalterstellungen decodieren und dem Mikroprozessor Informationen zugänglich machen, die es dem Mikroprozessor ermöglichen, den Schalter bei einem gewünschten Pegel auszulösen.

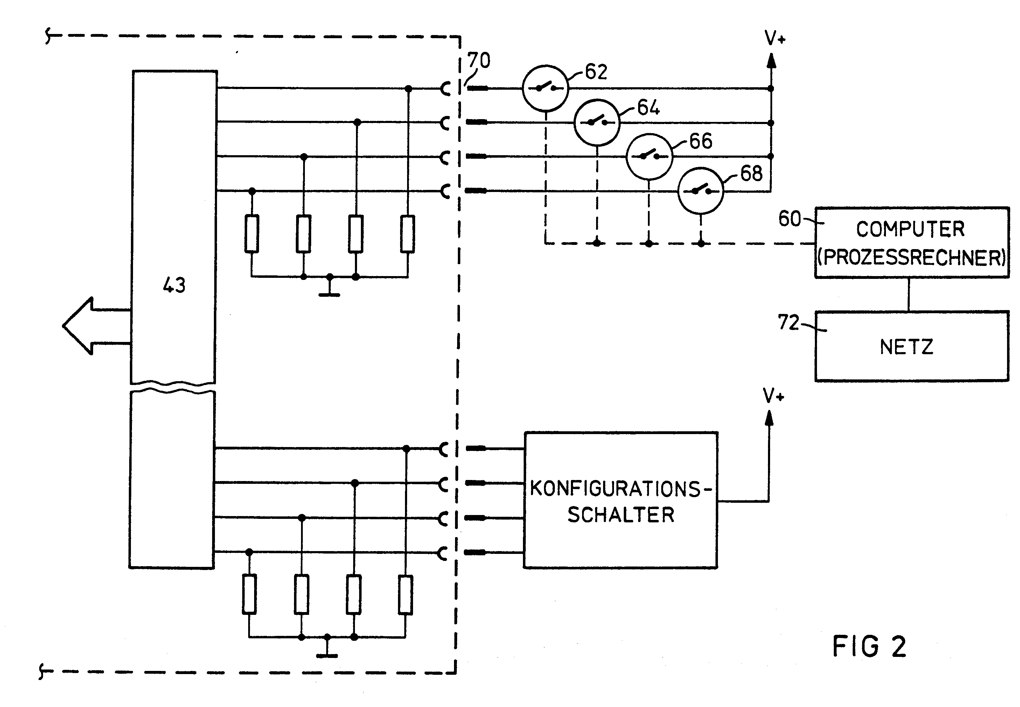

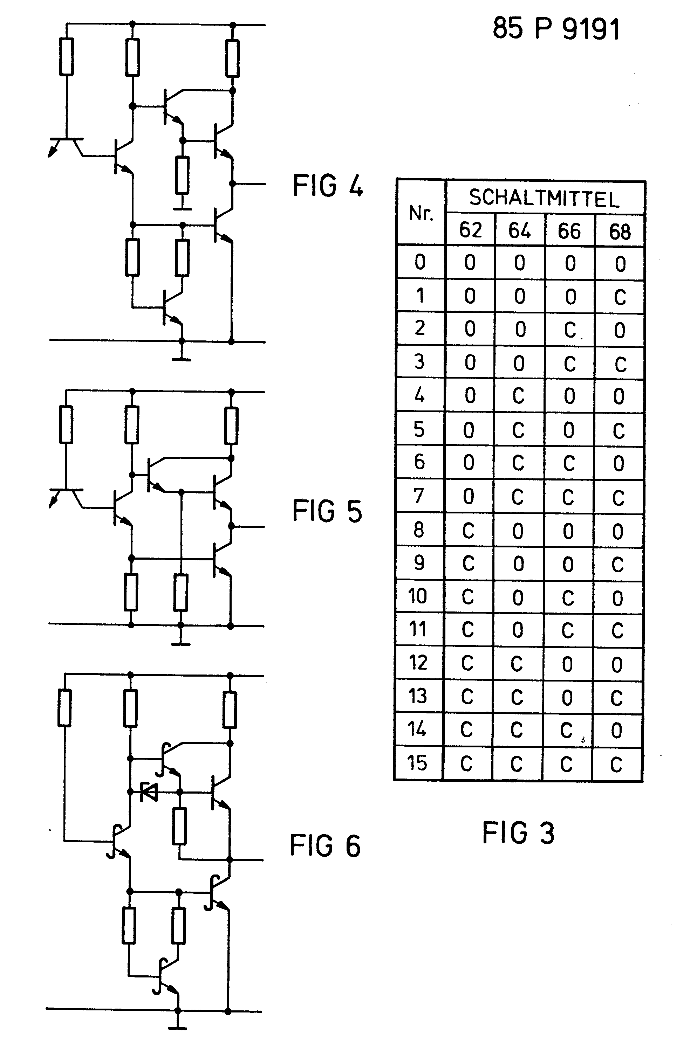

In der Figur 2 ist der Anschluß der vorliegenden Erfindung an den Decoder 43 gezeigt. In der Figur 2 ist einer der vier an den Decoder 43 angeschlossenen Einstellschalter durch eine Einrichtung nach der Erfindung ersetzt, die in dieser Ausführungsform einen Computer 60 und Relaiskontakte 62, 64, 66 und 68 umfassen. Durch Verwendung des Computers 60 und der Relaiskontakte kann die Schutzcharakteristik an eine Änderung des Betriebszustandes dynamisch und durch direkte Fernsteuerung angepaßt werden. Der Leistungsschalter ist unmittelbar mit dem Computer 60 verbunden, der zwecks Änderung des Schutzpegels in Abhängigkeit wechselnder Zustände des Netzes 72 oder der gemessenen Belastung programmiert wird. Die Relaiskontakte sind über einen Umsetzer 70 mit dem Decoder 43 verbunden. Der Umsetzer 70 kann im einfachsten Fall eine Klemmleiste oder ein Einheits-TTL-Baustein sein, dessen Stufen in den Figuren 4 bis 6 gezeigt sind.

Gleichgültig welche Art von Umsetzer benutzt wird, kann die äußere Steuerung entweder durch einen entfernt angeordneten Schalter, einen Prozeßrechner, einen Überwachungscomputer oder ein Taktgeber erreicht werden. Die Programmierung kann so eingerichtet sein, daß beliebige Grundkennwerte der Zeit-Stromkennlinie durch die äußere Steuereinrichtung beeinflußt werden können. Der Umsetzer 70 kann auch ein normales Computer-Interface sein, jedoch wird für die meisten Anwendungen die Vielfalt und Leistungsfähigkeit eines solchen Interfaces nicht benötigt und ist wirtschaftlich nicht gerechtfertigt. Die äußere Steuereinrichtung, welche die drehbaren Wahlschalterer ersetzt, kann gleichfalls aus Schaltern und Relais bestehen. Jedoch können die Schaltvorgänge auch mit Halbleiterschaltern oder Halbleiterrelais durchgeführt werden.

Wie die vorstehenden Darlegungen zeigen, kann der Leistungsschalter unmittelbar mit einem Prozeßrechner verbunden werden, der zweck Änderung des Schutzpegels programmiert ist. Die vorliegende Erfindung kann dazu benutzt werden, mehrere unterschiedliche Schutzpegel für einen Verbraucher bereitzustellen, der mehrere unterschiedliche Betriebszustände annehmen kann, z. B. ein Motor für zwei Drehzahlen oder für zwei Betriebsspannungen. Diese Eigenschaft richtet sich an Bestrebungen zu einer verstärkten Automation und umfassender Fabriksteuerung durch die Verwendung hierarchischer Computerkonzepte. Mit Hilfe der Erfindung können alle Kennwerte der Zeit-Stromkennlinie entsprechend außerhalb des Leistungsschalters erfaßter Meßwerte ferngesteuert werden.

Die vorliegende Erfindung umfaßt ferner ein Verfahren zur Umstellung eines Leistungsschalters mit einer mikroprozessorgesteuerten Auslöseeinheit und von außen zugänglichen Wahlschaltern zur Einstellung der Auslösecharakteristik in einen fernprogrammierbaren Leistungsschalter. Das Verfahren schließt die Abtrennung eines oder mehrere der Wahlschalter von dem Leistungsschalter ein, die Anbringung eines Umsetzers an dem Leistungsschalter, die Verbindung von Schaltmitteln mit dem Umsetzer und die Steuerung des Öffnens und Schließens der Schaltmittel zur Einstellung der Auslösekennwerte. Das Verfahren kann ferner einen Computer umfassen, der das Öffnen und Schließen der Schaltmittel steuert, um hierdurch eine vorgewählte Auslösechrakteristik zu erzielen.

Die Wirkungsweise des fernprogrammierbaren Leistungsschalters ist einfach. Der Computer 60 entscheidet aufgrund des von ihm überwachten Betriebszustandes, daß der Schutzpegel des Leistungsschalters verändert werden muß. Dieser überwachte Betriebszustand könnte eine Änderung in der Belastung des Stromkreises sein oder es könnte eine Um schaltung auf eine andere Betriebsspannung des Verbrauchers oder einer von mehreren verschiedenen Faktoren sein. Sind alle Schaltmittel offen, wird der Leistungsschalter auf einen minimalen Überstrompegel ansprechen, z. B. 20% des Nennstromes des Leistungsschalters. Die Figur 3 zeigt hierzu eube Tabelle, in der die Stellungen der kontakte eingetragen sind. Mit 0 (open) ist hierbei die geöffnete, mit C (closed) die geschlossene Stellung bezeichnet. Aufgrund des neuen Betriebszustandes entscheidet der Computer, den Pegel auf 50% des Nennstromes anzuheben. Es sei nun angenommen, daß die Signale zur Bewirkung folgender Änderungen programmiert sind:

**0 222 688**

| Meßwert | Einstellung Nr. | Datenwort |
|---------|-----------------|-----------|
| 20% | 0 | 0000 |
| 30% | 1 | 0001 |
| 40% | 2 | 0010 |
| 50% | 3 | 0011 |
| 60% | 4 | 0100 |
| 70% | 5 | 0101 |
| 80% | 6 | 0110 |
| 90% | 7 | 0111 |
| 100% | 8 | 1000 |
| 110% | 9 | 1001 |
| 120% | 10 | 1010 |
| 130% | 11 | 1011 |
| 140% | 12 | 1100 |
| 150% | 13 | 1101 |
| 160% | 14 | 1110 |
| 170% | 15 | 1111 |

In diesem Fall würde der Computer veranlassen, daß die Kontakte 62 und 64 offen und die Kontakte 66 und 68 geschlossen sind. Dies wäre die Anweisung für den Leistungsschalter, 50% als den neuen Bezugswert anzunehmen.

Aus der vorstehenden Beschreibung geht hervor, daß die beschriebenen fernprogrammierbaren Leistungsschalter oder entsprechend umgerüstete Leistungsschalter ein neues Arbeitsmittel zur Gestaltung des Betriebsablaufes in automatisierten Fabriken darstellt.

Der elektrische Schutz der Fabrik kann nun dynamisch sein und kann auf jede Änderung der elektrischen Belastung und der spezifischen Bedürfnisse jegliches gerade ablaufenden Vorganges ansprechen.

**Patentansprüche**

1. Einrichtung zur ferngesteuerten Veränderung von Auslösekennwerten eines elektronischen Auslösers eines Schaltgerätes (20) mittels einer von dem Schaltgerät (20) getrennten Steuereinrichtung (60), **dadurch gekennzeichnet**, daß die Steuereinrichtung (60) durch aus dem Haupstromkreis (A, B, C, N; 72) des Schaltgerätes (20) ableitbaren Werten beaufschlagbar ist und daß zwischen die Steuereinrichtung (60) und einer Eingangsschaltung (43) des elektronischen Auslösers ein Umsetzer (70) zur Übertragung von Auslösekennwerten geschaltet ist.

2. Einrichtung nach Anspruch 1, **dadurch gekennzeichnet**, daß der elektronische Auslöser einen Mikroprozessor (41) zur Verarbeitung von Meßwerten aus dem zu überwachenden Netz (A, B, C, N) und zur Agabe eines Auslösesignals für einen Auslösemechanismus (21) sowie eine Decodiereinrichtung (46) für binär codierte (BCD-) Signale aufweist.

3. Einrichtung nach Anspruch 2, **dadurch gekennzeichnet**, daß der Steuereinrichtung (60) Schaltmittel (62, 64, 66, 68) zugeordnet sind, die zwischen die Steuereinrichtung (60) und den Umsetzer (70) geschaltet sind.

4. Einrichtung nach Anspruch 3, **dadurch gekennzeichnet**, daß die Schaltmittel steuerbare Schaltkontakte (62, 64, 66, 68) sind.

5. Einrichtung nach Anspruch 3, **dadurch gekennzeichnet**, daß die Schaltmittel steuerbare Halbleiter sind.

6. Einrichtung nach einem der vorangehenden Ansprüche, **dadurch gekennzeichnet**, daß als Steuereinrichtung ein Prozeßrechner (60) dient.

7. Verfahren zur Umrüstung eines Leistungsschalters mit mikroprozessorgesteuerter Auslöseeinheit und von außen zugänglichen Wahlschaltern zur Beeinflussung von Auslösekennwerten auf ferngesteuerte Beeinflussung der Auslösekennwerte, **gekennzeichnet durch** folgende Schritte:
- Abtrennung eines oder mehrerer Wahlschalter von dem Leistungsschalter (20);
- Anschluß eines Umsetzers 870) an den Leistungsschalter (20);
- Anschluß von steuerbaren Schaltmitteln (62, 64, 66, 68) an den Umsetzer (70);
- Bereitstellung einer Steuereinrichtung (60) zur Betätigung der Schaltmittle und
- Bereitstellung von Mitteln zur Erfassung von Meßwerten aus dem durch den Leistungsschalter (20) zu schützenden Stromkreis (72) zur Eingabe in die Steuereinrichtung (60).

8. Verfahren nach Anspruch 7, **dadurch gekennzeichnet**, daß als Steuereinrichtung ein Prozeßrechner (60) bereitgestellt wird.

5

FIG 1

V+

70

62

64

66

68

60 COMPUTER (PROZESSRECHNER)

72 NETZ

43

V+

KONFIGURATIONS-SCHALTER

0222688

85 P 9191

FIG 2

FIG 4

FIG 5

FIG 6

0222688

| Nr. | SCHALTMITTEL | | | |
|---|---|---|---|---|
| | 62 | 64 | 66 | 68 |
| 0 | 0 | 0 | 0 | 0 |
| 1 | 0 | 0 | 0 | C |
| 2 | 0 | 0 | C | 0 |
| 3 | 0 | 0 | C | C |
| 4 | 0 | C | 0 | 0 |
| 5 | 0 | C | 0 | C |
| 6 | 0 | C | C | 0 |
| 7 | 0 | C | C | C |
| 8 | C | 0 | 0 | 0 |
| 9 | C | 0 | 0 | C |
| 10 | C | 0 | C | 0 |
| 11 | C | 0 | C | C |
| 12 | C | C | 0 | 0 |
| 13 | C | C | 0 | C |
| 14 | C | C | C | 0 |
| 15 | C | C | C | C |

FIG 3